# EUROPÄISCHE PATENTSCHRIFT

(11) **EP 3 655 677 B1**
(45) Veröffentlichungstag und Bekanntmachung des Hinweises auf die Patenterteilung: **02.12.2020**
(21) Anmeldenummer: 18730654.3
(22) Anmeldetag: 24.05.2018
(51) Int. Cl.: F16D 65/12, B60B 27/00

(54) **RADNABE, SYSTEM AUS EINER BREMSSCHEIBE UND EINER RADNABE UND EIN VERFAHREN ZUR MONTAGE EINER BREMSSCHEIBE AN EINER RADNABE**
WHEEL HUB, SYSTEM CONSISTING OF A BRAKE DISC AND A WHEEL HUB, AND A METHOD FOR MOUNTING A BRAKE DISC ON A WHEEL HUB
MOYEU DE ROUE, SYSTÈME CONSTITUÉ D'UN DISQUE DE FREINAGE ET D'UN MOYEU DE ROUE ET PROCÉDÉ POUR ASSEMBLER UN DISQUE DE FREINAGE SUR UN MOYEU DE ROUE

(30) Priorität: 18.07.2017 DE 102017116131
(43) Veröffentlichungstag der Anmeldung: 27.05.2020
(73) Patentinhaber: SAF-HOLLAND GmbH, 63856 Bessenbach (DE)
(72) Erfinder: BIEWER, Frederik, 63808 Haibach (DE); MATTERN, Jonas, 63755 Alzenau (DE); ARPACI, Muhammet, 63741 Aschaffenburg (DE); TUKAC, Petr, 63739 Aschaffenburg (DE); WALLMEIER, Stefan, 63773 Goldbach (DE)
(74) Vertreter: Müller Schupfner & Partner Patent- und Rechtsanwaltspartnerschaft mbB
(86) Internationale Anmeldenummer: PCT/EP2018/063632
(87) Internationale Veröffentlichungsnummer: WO 2019/015830

(56) Entgegenhaltungen:
- WO-A1-95/13488
- WO-A1-02/087901
- WO-A1-2007/118665
- DE-B3-102007 008 725

## Beschreibung

Die vorliegende Erfindung betrifft eine Radnabe, ein System aus einer Bremsscheibe und einer Radnabe sowie ein Verfahren zur Montage einer Bremsscheibe an einer Radnabe.

Radnaben sind aus dem Stand der Technik hinlänglich bekannt. Sie dienen der Anbindung eines Rads an ein Achselement, beispielsweise an eine Achse eines Nutzfahrzeugs. Hierbei werden üblicherweise Bremsscheiben drehfest an die Radnabe angebunden. Typischerweise werden dabei die Bremsscheiben von der Bremsscheibenseite kommend an den Radnaben angeschraubt. Dadurch wird eine Klemmlänge, d. h. eine Gesamtdicke, die sich aus den verbundenen Elementen und einem der Verbindung dienenden Befestigungsmittel in Verbindungsrichtung ausbildet, durch das in der Regel flache Bremsscheiben- bzw. Abdapterelement und einen der Sichtseite der montierten Radnabe abgewandten Bauraum am Fahrzeug limitiert. Folge ist, dass das Befestigungsmittel, wie z. B. eine Schraube, eine entsprechend hohe Festigkeit für ein Aufbringen von erforderlichen Verspannkräften aufweisen muss. Zudem kann keine weitere Erhöhung des Bremsmoments realisiert werden.

Die WO 2007/118 665 A1 betrifft eine Bremsscheibe mit einer Nabe und mit einem über Verbindungsstege verbundenen Reibring, wobei die Nabe mit Nocken versehen ist und einen topfartigen hohlzylindrischen Abschnitt weist.

Die DE 10 2007 008 725 B3 zeigt eine Bremsscheiben-Nabenverbindung zur Verbindung einer innenbelüfteten Bremsscheibe mit einer einen hohlzylindrischen Abschnitt aufweisenden Nabe, wobei die Nabe am äußeren Umfang ihres hohlzylindrischen Abschnitts mit Nocken versehen ist.

Die WO 95/13488 A1 betrifft eine Bremsscheibe, insbesondere für Straßennutzfahrzeuge, wobei an der zentralen Öffnung der Bremsscheibe eine ringförmige Anflanschfläche ausgebildet ist, die mehrere Bohrungen aufweist, über die die Bremsscheibe mithilfe von Schrauben an einer Radnabe befestigt werden kann.

Die WO 02/087 901 A1 betrifft eine Radnabe zur Aufnahme einer Bremsscheibe mit einem an den Radflansch angeformten Nabenkörper, der einen Halsabschnitt aufweist, der zur Aufnahme der Bremsscheibe ausgelegt ist.

Angesichts des beschriebenen Stands der Technik ist es somit eine Aufgabe der vorliegenden Erfindung, eine verbesserte Radnabe bereitzustellen, mit der sich insbesondere eine gegenüber dem Stand der Technik vergrößerte Klemmlänge bei der Anbindung der Bremsscheibe an die Radnabe realisieren lässt.

Diese Aufgabe wird gelöst durch eine Radnabe gemäß Anspruch 1, ein System aus einer Bremsscheibe und einer Radnabe gemäß Anspruch 14 sowie einem Verfahren zum Montieren der Bremsscheibe an der Radnabe. Weitere Vorteile und Merkmale der Erfindung ergeben sich aus den Unteransprüchen sowie der Beschreibung und den beigefügten Figuren.

Erfindungsgemäß ist eine Radnabe vorgesehen, die einen in radialer Richtung gesehen außenliegenden Kragenbereich und einen in radialer Richtung gesehen innenliegenden Kernbereich umfasst, wobei der innenliegende Kernbereich in axialer Richtung eine größere Erstreckung aufweist als der außenliegenden Kragenbereich (d. h. in axialer Richtung gesehen der innenliegende Kernbereich dicker als der außenliegenden Kragenbereich ist), und wobei die Radnabe im innenliegenden Kernbereich eine im Wesentlichen axial verlaufende Primäraussparung zur Anbindung einer Bremsscheibe aufweist. Gegenüber dem Stand der Technik gestattet die erfindungsgemäße Positionierung der Primäraussparung größere Klemmlängen. Dadurch lassen sich mit Vorteil höhere Verspannkräfte realisieren, die wiederum höhere Bremsmomente ermöglichen. Zudem lassen sich thermische Effekte, veranlasst durch die Wärmeentwicklung in der Bremsscheibe beim Bremsen, im Vergleich zu Radnaben, deren Primäraussparungen zur Anbindung der Bremsscheibe geringere Klemmlängen zulassen, wirkungsvoller kompensieren. Grundsätzlich ist unter einem Kragenbereich ein ringscheibenförmiger bzw. bordürenförmiger Abschluss der Radnabe zu verstehen. Im montierten Zustand der Radnabe bildet der Kragenbereich den äußersten Umfangsbereich der Radnabe, mit dem die Radnabe vorzugsweise in radialer Richtung und axialer Richtung gesehen zu einer Seite hin abschließt. Vorteilhafterweise ist der Kragenbereich als Anschlußbereich für eine Radfelge ausgebildet bzw. dient der Anordnung einer Radfelge. Beispielsweise nimmt das Verhältnis der radialen Erstreckung des Kragenbereichs zum Durchmesser der Radnabe einen Wert zwischen 0,1 und 0,3, bevorzugt zwischen 0,15 und 0,25 und besonders bevorzugt zwischen 0,21 und 0,24 an. Dabei ist der Kragenbereich im montierten Zustand der Sichtseite des Fahrzeugs zugewandt. Insbesondere ist es vorgesehen, dass der Kragenbereich in radialer Richtung gesehen im Wesentlichen eine in axialer Richtung bemessene konstante Dicke aufweist. Hierbei wird insbesondere unter einer Dicke diejenige Ausdehnung des Kragenbereichs verstanden, die von dem im Betrieb um eine Rotationsachse rotierenden Kragenbereich in Anspruch genommen wird. Dadurch bleiben etwaige lokale Rücksprünge bei der Bestimmung der Dicke unberücksichtigt. Unter "im Wesentlichen axial verlaufend" kann dabei verstanden werden, dass die maßgebliche Richtung einen Winkel von maximal 15°, bevorzugt von maximal 10° und besonders bevorzugt von maximal 5° mit der idealen axialen Richtung bilden darf. Die ideale axiale Richtung ist insbesondere die Richtung der Radachse bzw. die Richtung entlang der Rotationsachse der Radnabe. Weiterhin ist es vorgesehen, dass der Kernbereich in radialer Richtung gesehen seine axial bemessene Dicke verändert. Vorzugsweise umfasst der Kernbereich einen zentralen Hohlraum, der zur Aufnahme eines Achselements vorgesehen ist. Dabei ist der Kernbereich insbesondere zur Anlage an das Achselement vorgesehen und ummantelt im montierten Zustand das Achselement, beispielsweise einen Achsstummel, zumindest bereichsweise. Weiterhin ist es bevorzugt vorgesehen, dass der Kernbereich und der Kragenbereich unmittelbar in radialer Richtung aneinander anschließen bzw. in einander übergehen. Bevorzugt ist es vorgesehen, dass das Verhältnis der radialen Erstreckung des Kernbereichs zum Durchmesser der Radnabe einen Wert zwischen 0,3 und 0,7, bevorzugt zwischen 0,35 und 0,55 und besonders bevorzugt zwischen 0,4 und 0,5 annimmt. Vorzugsweise ist es vorgesehen, dass es sich bei der Primäraussparung um eine Bohrung, insbesondere eine Durchgangsbohrung handelt. Weiterhin ist es vorzugsweise vorgesehen, dass die Radnabe zur Anbindung einer flachen Bremsscheibe, beispielsweise einer in axialer Richtung 1 bis 3 cm dicken Bremsscheibe, vorgesehen ist. Denkbar ist auch, dass die Primäraussparung in der der Rotationsachse zugewandten Hälfte, bevorzugt in einem der Rotationsachse zugewandten ersten Drittel oder besonders bevorzugt in einem der Rotationsachse zugewandten ersten Viertel des Kernbereichs oder der Radnabe angeordnet ist. Insbesondere ist es vorgesehen, dass die Radnabe einstückig bzw. intergral ausgebildet ist, d. h. die Radnabe ist nicht aus mehreren Bestandteilen zusammengesetzt, sondern Bremsscheibe, Achse und Rad bzw. Radfelge lassen sich an ein einstückiges Bauteil, d. h. die Radnabe, anbinden. Beispielswiese ist die Radnabe einstückig geschmiedet oder gegossen.

Vorzugsweise ist es vorgesehen, dass der Kernbereich im Wesentlichen radial verlaufende Rippenelemente umfasst. Vorzugsweise verlaufen die Rippenelemente in axialer Richtung gesehen bereichsweise parallel zur Radachse. An ihrem dem Kragenbereich zugewandten Ende sind die Rippenelemente radial nach außen gebogen. Durch die Rippenelemente kann mit Vorteil auf einen massiven Kernbereich verzichtet werden, wodurch Gewicht und Material an der Radnabe eingespart werden kann. Besonders bevorzugt ist es vorgesehen, dass die Rippenelemente in Umlaufrichtung gesehen in einem Bereich am Kragelement münden, in dem keine Sekundäraussparungen vorgesehen sind. Die Sekundäraussparungen dienen vorzugsweise der Anbindung des Rads bzw. der Radfelge an die Radnabe. Vorzugsweise mündet das Rippenelement mittig zwischen zwei in Umlaufrichtung zueinander benachbarten Sekundäraussparungen. Dadurch lässt sich bei homogener Spannungsverteilung mittels der Rippenelemente eine Gewichtsreduktion der Radnabe bei gleicher Achslast erzielen. Unter "im Wesentlichen radial verlaufend" ist in diesem Zusammenhang zu verstehen, dass die Rippenelemente einen Winkel von maximal 10°, bevorzugt von maximal 5° und besonders bevorzugt von maximal 2° mit der idealen radialen Richtung bilden dürfen. Die ideale radiale Richtung ist insbesondere die radiale Richtung zur Radachse bzw. zur Rotationsachse der Radnabe.

Zweckmäßigerweise verbinden die Rippenelemente den Kernbereich mit dem Kragenbereich, insbesondere ausschließlich. Unter "verbinden" kann dabei unter anderem verstanden werden, dass die Rippenelemente, insbesondere ausschließlich, für die Kraft- und/oder Momentenübertragung zwischen dem Kernbereich und dem Kragenbereich ausgelegt sind. Hierdurch kann eine besonders kompakte Radnabe erreicht werden. In anderen Worten kann dies bedeuten, dass die Rippenelemente den Teil des Kernbereichs ausbilden, welcher mit dem Kragenbereich verbunden ist.

Zweckmäßig ist es vorgesehen, dass ein Rippenelement mehrere Primäraussparungen aufweist. Beispielsweise sind genau zwei Primäraussparungen in dem Rippenelement, insbesondere in jedem Rippenelement, vorgesehen. Dadurch lässt sich eine Bremsscheibenanlagefläche mit Vorteil vergrößern, da sich zwei Primäraussparungen eine gemeinsame Bremsscheibenanlagefläche teilen können. Vorzugsweise sind die in einem Rippenelement als Paar realisierten Primäraussparungen in Umlaufrichtung gesehen mittig zwischen zwei benachbarten Sekundäraussparungen angeordnet. Dabei ist es beispielsweise vorgesehen, dass in Umlaufrichtung gesehen abwechselnd zwischen jeweils zwei benachbarten Sekundäraussparungen ein Rippenelement oder kein Rippenelement mündet. Vorzugsweise sind die axial verlaufenden Primäraussparungen in radialer Richtung gesehen in demjenigen Bereich des Rippenelements angeordnet, in dem die Rippenelemente, insbesondere dem Rippenelement zugeordnete Mantelaußenflächen, im Wesentlichen axial zur Radachse verlaufen. Die Primäraussparungen können in das Rippenelement an deren dem Kragenbereich angewandten Ende der Radachse eingelassen sein.

Alternativ ist es vorstellbar, dass jedes Rippenelement genau bzw. lediglich eine Primäraussparung aufweist. Dadurch lassen sich im Vergleich zu den Rippenelementen mit den mehreren Primäraussparungen schmalere Rippenelemente realisieren. Vorzugsweise münden die Rippenelemente in Umlaufrichtung gesehen mittig in einem Bereich zwischen zwei zueinander benachbarten Sekundäraussparungen. Vorzugsweise sind die Primäraussparungen in radialer Richtung gesehen in dem Bereich des Rippenelements angeordnet, in dem die Rippenelemente, insbesondere dem Rippenelement zugeordnete Mantelaußenflächen, im Wesentlichen axial zur Radachse verlaufen. Mit anderen Worten: Die Primäraussparung ist in das Rippenelement an deren dem Kragenbereich angewandten Ende der Radachse eingelassen.

In einer weiteren Ausführungsform der vorliegenden Erfindung ist es vorgesehen, dass der Kragenbereich eine Materialverdünnung aufweist. Durch die Materialverdünnung lässt sich in vorteilhafter Weise das Gesamtgewicht der Radnabe reduzieren. Vorzugsweise ist die Materialverdünnung als Rücksprung zwischen zwei benachbarten Sekundäraussparungen vorgesehen, der sich zweckmäßigerweise axial in den Kragenbereich hinein erstreckt. Insbesondere ist es vorgesehen, dass die Rücksprünge auf der im montierten Zustand der Bremsscheibe zugewandten Seite des Kragenbereichs angeordnet sind. Dadurch kann in vorteilhafter Weise die der Bremsscheibe abgewandte Seite des Kragenbereichs flächig ausgestaltet werden, um eine möglichst ebene Anlagefläche für ein Anbinden des Rads zur Verfügung zu stellen. Vorzugsweise nimmt ein Verhältnis zwischen einer lokalen Dicke des Kragenbereichs und einer, beispielsweise im Bereich der Sekundäraussparungen gemessenen, Dicke des Kragenbereichs einen Wert zwischen 0,05 und 0,5, bevorzugt zwischen 0,1 und 0,25 und besonders bevorzugt zwischen 0,15 und 0,2 an. Überraschenderweise hat sich herausgestellt, dass solche Materialverdünnungen, insbesondere für Verhältnisse zwischen 0,15 und 0,2, die Stabilität des Kragenbereichs nicht negativ beeinträchtigen.

Vorzugsweise ist es vorgesehen, dass der außenliegende Kragenbereich eine Sekundäraussparung aufweist, wobei sich die Primäraussparung in axialer Richtung weiter erstreckt als die Sekundäraussparung. Dadurch wird zur Anbindung der Bremsscheibe diejenige Aussparung bereitgestellt, mit der sich eine größere Klemmlänge realisieren lässt, da die Sekundäraussparungen im dünneren Kragenbereich angeordnet sind.

Zweckmäßig ist es vorgesehen, dass ein Verhältnis zwischen einer in axialer Richtung bemessenen Erstreckung der Primäraussparung zu einer in axialer Richtung bemessenen Erstreckung der Sekundäraussparung einen Wert zwischen 0,05 und 0,45, bevorzugt 0,01 und 0,35 und besonders bevorzugt 0,01 und 0,2 annimmt.

In einer weiteren Ausführungsform der vorliegenden Erfindung ist es vorgesehen, dass die Primäraussparungen und die Sekundäraussparungen in axialer Richtung zueinander versetzt angeordnet sind. Beispielsweise schließt die dem Kragenbereich zugewandte Öffnung der Primäraussparung nicht bündig mit einer Seite des Kragenbereichs ab. Die Primäraussparung ist in axialer Richtung gesehen zur Sekundäröffnung bzw. gegenüber dem Kragenbereich vorzugsweise zurückversetzt. Dadurch lassen sich von einer Fahrzeugaußenseite kommende Befestigungselemente, beispielsweise Schrauben, so an der Radnabe anordnen, dass sie nicht gegenüber dem Kragenbereich in axialer Richtung vorstehen. Somit lassen sich die Befestigungselemente zumindest teilweise geschützt anordnen.

Zweckmäßigerweise durchdringt zumindest eine, bevorzugt alle, Primäraussparung den Kernbereich und/oder die Radnabe vollständig. Hierdurch kann eine besonders einfache Montage der Bremsscheibe erreicht werden. Insbesondere kann hierdurch erreicht werden, dass die Bremsscheibe von der gegenüberliegenden Seite der Radnabe montiert bzw. festgezogen werden kann.

Bevorzugt sind die Primäraussparungen in eine Umlaufrichtung versetzt zu den Sekundäraussparungen angeordnet. Hierdurch kann eine besonders mechanisch belastbare Radnabe erreicht werden.

Zweckmäßig ist es vorgesehen, dass ein Verhältnis zwischen einer in axialer Richtung bemessenen Erstreckung der Primäraussparung zu einer Gesamtausdehnung der Radnabe in axialer Richtung einen Wert zwischen 0,5 und 0,98, bevorzugt 0,75 und 0,95 und besonders bevorzugt zwischen 0,78 und 0,88 annimmt. Bei der Realisierung des Verhältnisses zwischen 0,78 und 0,88 lässt sich in vorteilhafter Weise eine möglichst große Klemmlänge erzielen, ohne dass die bauraumfüllende Ausdehnung der Radnabe in axialer Richtung vergrößert werden muss.

Erfindungsgemäß ist es vorgesehen, dass ein Verhältnis zwischen einem radialen Abstand zwischen der Rotationsachse und der Primäraussparung und einem in radialer Richtung bemessenen Durchmesser der Radnabe einen Wert zwischen 0,3 und 0,6, bevorzugt, zwischen 0,35 und 0,55 und besonders bevorzugt zwischen 0,4 und 0,5 annimmt. Durch die Realisierung dieser Verhältnisse lässt sich die Primäraussparung möglichst nah an der Radachse in der Radnabe realisieren. Hier ist die in axialer Richtung bemessene Dicke der Radnabe in radialer Richtung gesehen am größten, so dass sich entsprechend große Klemmlängen realisieren lassen. Vorzugsweise werden bei der Anordnung der Primäraussparungen etwaige Profilierungen der Radnabe auf der dem Hohlraum zugewandten Seite des Kernbereichs berücksichtigt.

In einer weiteren Ausführungsform der vorliegenden Erfindung ist es vorgesehen, dass ein Verhältnis zwischen dem radialen Abstand zwischen der Rotationsachse und der Primäraussparung und einer sich in axialer Richtung erstreckenden Länge der Primäraussparung einen Wert zwischen 0,65 und 0,85, bevorzugt zwischen 0,7 und 0,78, und besonders bevorzugt zwischen 0,72 und 0,77 annimmt. In diesen Ausführungen erstreckt sich die Primäraussparung weiter als ihr radialer Abstand zwischen der Rotationsachse und der Primäraussparung. Insbesondere für das Verhältnis zwischen 0,72 und 0,77 werden Primäraussparungen für möglichst große Klemmlängen erzielt, die zudem einen vergleichsweise geringen Abstand zur Rotationsachse aufweisen.

Vorzugsweise ist es vorgesehen, dass in Umlaufrichtung gesehen zwischen zwei Rippenelementen, insbesondere jeweils, ein lichter Bereich angeordnet ist. Hierdurch kann erreicht werden, dass Kühlluft durch den/die lichten Bereich/e an die Bremsscheibe gelangt, sodass diese gekühlt wird.

In einer bevorzugten Ausführungsform ist die in Umlaufrichtung bemessene Fläche, die den Rippenelementen zugeordnet ist, 0,3 bis 0,5-mal so groß wie die Fläche, die dem lichten Bereich zugeordnet ist. Es hat sich herausgestellt, dass solch große lichten Bereiche realisierbar sind, ohne dass die Stabilität der Radnabe gefährdet wird. Durch diese - überraschend mögliche - Ausgestaltung kann zum einen eine besonders leichte Radnabe erreicht werden und zusätzlich kann durch diese großen lichten Bereiche die Kühlwirkung der Bremsscheibe gesteigert werden.

Zweckmäßig ist es vorgesehen, dass sich die Primäraussparung in radialer Richtung gesehen über die gesamte Länge des Rippenelements erstreckt, oder, dass die Primäraussparung zumindest teilweise durch einen hülsenförmigen Teilbereich, der vom Rippenelement, vorzugsweise in axialer Richtung, absteht, gebildet ist. Durch die vollständige Erstreckung der Primäraussparungen im Rippenelement, lässt sich das zur Verbindung vorgesehene Befestigungsmittel vergleichsweise einfach einführen bzw. führen und ist zumindest teilweise, vorzugsweise größtenteils, in der Primäraussparung geschützt angeordnet. In Falle des hülsenförmigen Teilbereichs ist es mit Vorteil nicht erforderlich, das Rippenelement über eine möglichst lange Strecke parallel zur Radachse auszugestalten. D. h. man erhält bei der Ausgestaltung der Rippenelemente eine größere Ausgestaltungsfreiheit, da der hülsenförmige Teilbereich die vergrößerte Klemmlänge sicherstellt.

In einer weiteren Ausführungsform der vorliegenden Erfindung ist es vorgesehen, dass die Primäraussparung zu einer Seite hin in einer Bremsscheibenanlagefläche mündet, wobei vorzugsweise die Bremsscheibenanlagefläche in Umlaufrichtung gesehen unterbrochen oder durchgehend ausgestaltet ist. Im montierten Zustand liegt die Bremsscheibe oder ein Adapterelement unmittelbar an der Bremsscheibenanlagefläche an. Insbesondere ist es vorgesehen, dass ein Ende des Rippenelements die Bremsscheibenanlagefläche bereitstellt. Im Falle einer durchgehenden Bremsscheibenanlagefläche lässt sich eine durchgehende flächige Anlage bereitstellen, während im Fall einer unterbrochenen Bremsscheibenanlagefläche mit Vorteil Material und Gewicht der Radnabe eingespart werden können.

Erfindungsgemäß ist ebenfalls ein System aus einer Bremsscheibe und einer erfindungsgemäßen Radnabe vorgesehen, wobei die Bremsscheibe mittels eines durch die Primäraussparung geführten Befestigungsmittels an der Radnabe, insbesondere an der Bremsscheibenanlagefläche, anbindbar bzw. angebunden ist. Alle für die erfindungsgemäße Radnabe beschriebenen Merkmale und deren Vorteile lassen sich sinngemäß ebenfalls auf das erfindungsgemäße System aus der Bremsscheibe und der Radnabe übertragen und andersherum. Insbesondere ist es vorgesehen, dass die Bremsscheibenanlagefläche auf der dem Kragenbereich in axialer Richtung gesehen gegenüberliegenden Seite der Radnabe angeordnet ist. Somit lassen sich Primäraussparungen realisieren, die sich in axialer Richtung zwischen der Bremsscheibenanlagefläche bis zum Kragenbereich erstrecken und somit eine möglichst große Klemmlänge ermöglichen. Hierbei durchgreift das Befestigungsmittel die Primäraussparung insbesondere vollständig. Vorzugsweise umfasst das Befestigungsmittel eine Schraube und gegebenenfalls eine Mutter.

Gemäß einer weiteren Ausführungsform der vorliegenden Erfindung ist es vorgesehen, dass bremsscheibenseitig ein Gewinde vorgesehen ist, beispielsweise in der Bremsscheibe oder in Form einer an der Bremsscheibe anliegenden Mutter. Dadurch wird die Anbindung der Bremsscheibe über ein Befestigungsmittel möglich, das von eine Kraftfahrzeugaußenseite in die Primäraussparung eingeführt wird, wenn die Radnabe bei der Montage auf das Achselement aufgezogen ist.

Erfindungsgemäß ist ebenfalls ein Verfahren zur Montage einer Bremsscheibe an einer Radnabe vorgesehen, umfassend die Schritte:
- Bereitstellen einer erfindungsgemäßen Radnabe,
- Einführen eines Befestigungsmittels in die Primäraussparung und
- Anbinden der Bremsscheibe mittels des Befestigungsmittels an die Radnabe. Alle für die erfindungsgemäße Radnabe beschriebenen Merkmale und deren Vorteile lassen sich sinngemäß ebenfalls auf das erfindungsgemäße Verfahren zur Montage der Bremsscheibe an die Radnabe übertragen und andersherum. Vorzugsweise wird die Bremsscheibe auf die Radnabe aufgezogen bis die Bremsscheibe an der Bremsscheibenanlagenfläche anliegt. Anschließend wird die Bremsscheibe mittels des Befestigungsmittels befestigt, indem das Befestigungselement in die Primäraussparung eingeführt und durch diese durchgeführt wird. Vorzugsweise ist die Breite der Primäraussparung in radialer Richtung gesehen angepasst an die entsprechenden Ausmaße des Befestigungsmittels angepasst, so dass das Befestigungselement die Primäraussparung möglichst vollständig füllt. Dadurch wird dem Befestigungselement mit Vorteil dessen Bewegungsfreiheit eingeschränkt, was beispielsweise die Montage der Bremsscheibe vereinfacht.

Gemäß einer weiteren Ausführungsform der vorliegenden Erfindung ist es vorgesehen, dass das Befestigungsmittel in die am Achselement anliegende Radnabe von einer Fahrzeugaußenseite kommend in die Primäraussparung eingeführt wird.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Es zeigt:
- **Fig.1:**: eine Radnabe gemäß einer ersten beispielhaften Ausführungsform der vorliegenden Erfindung
- **Fig.2:**: eine Radnabe gemäß einer zweiten beispielhaften Ausführungsform der vorliegenden Erfindung und
- **Fig. 3**: eine Radnabe gemäß einer dritten beispielhaften Ausführungsform der vorliegenden Erfindung

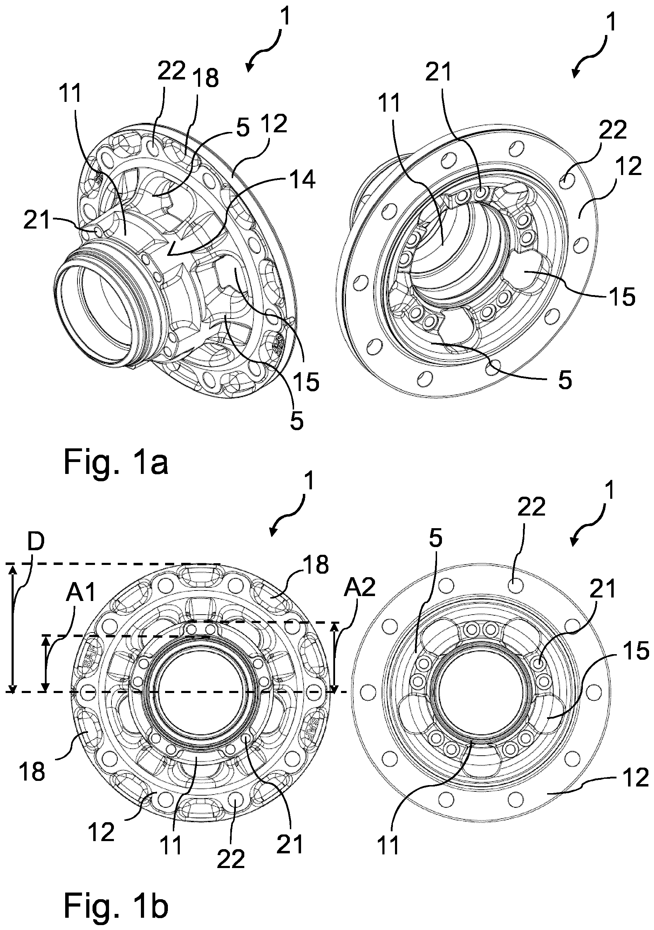

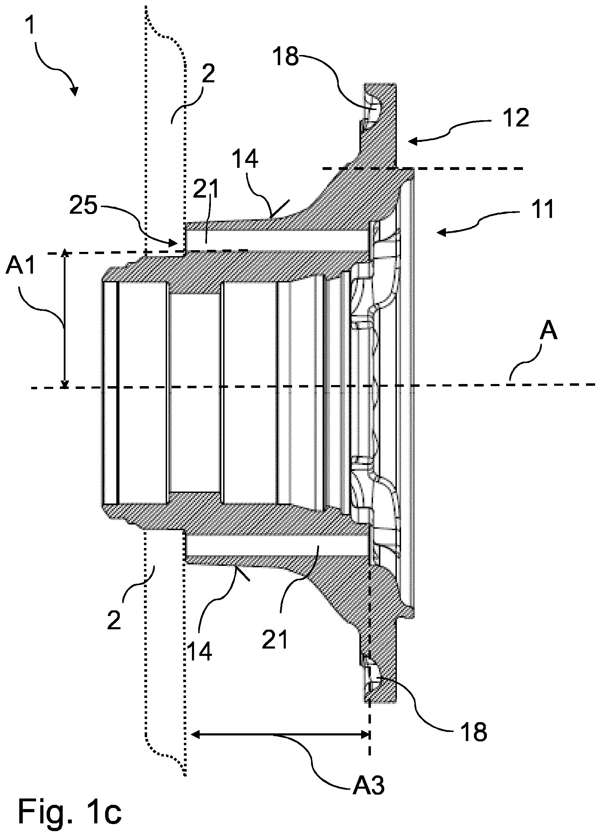

In den **Figuren 1a bis 1c** ist eine Radnabe 1 gemäß einer ersten beispielhaften Ausführungsform der vorliegenden Erfindung dargestellt. Dabei sind in der Figur 1a zwei perspektivische Ansichten, in der Figur 1b jeweils eine Draufsicht auf eine Rückseite (links) und eine Vorderseite (rechts) der Radnabe 1 und in Figur 1c eine Schnittansicht illustriert. Eine solche Radnabe 1 dient dazu, ein Rad an einem Achselement, beispielsweise einem Zapfen, einer Welle oder einer Achse, zu befestigen. Neben der Anbindung des Rads ist es weiterhin vorgesehen, dass eine Bremsscheibe 2 drehfest mit der Radnabe 1 verbunden ist. Vorzugsweise handelt es sich um eine Radnabe 2 für ein Nutzfahrzeug. Insbesondere ist es vorgesehen, dass die Radnabe 1 einstückig bzw. integral ausgestaltet ist. D. h. an der einstückigen Radnabe 1 sind sowohl Primäraussparungen 21 zur Anbindung der Bremsscheibe 2 an die Radnabe 1 und Sekundäraussparungen 22 zur Anbindung des Rads an die Radnabe 1 vorgesehen. Wesentliche Bestandteile der integral ausgestalteten Radnabe 1 sind ein in radialer Richtung gesehen außenliegender Kragenbereich 12 und ein in radialer Richtung gesehen innenliegender Kernbereich 11, wobei der Kernbereich 11 dicker ist als der Kragenbereich 12. Vorzugsweise ist der Kragenbereich 12 im Wesentlichen ringscheibenförmig ausgestaltet, d. h. eine in axialer Richtung bemessene Dicke des Kragenbereichs 12 ist in radialer Richtung gesehen im Kragenbereich 12 im Wesentlichen konstant. Dabei ist insbesondere als Dicke eine bauraumfüllende Erstreckung des im Betrieb um die Rotationsachse A rotierenden Kragenbereichs 12 zu verstehen. Bei einer solchen Messung bleiben lokale Materialverdünnungen 18 in Umlaufrichtung U unberücksichtigt. Vorzugsweise sind solche lokalen Materialverdünnungen 18 in Umlaufrichtung U gesehen in regelmäßigen bzw. äquidistanten Abständen in den Kragenbereich 12 eingelassen, um dadurch mit Vorteil das Gesamtgewicht der Radnabe 1 zu reduzieren. Beispielswiese sind die Materialverdünnungen 18 zwischen zwei benachbarten Sekundäraussparungen 22 angeordnet. Hierbei sind die Materialverdünnungen 18 vorzugsweise Rücksprünge auf der Rückseite des Kragenbereichs 12, d. h. der Seite, die im montierten Zustand der Bremsscheibe 2 zugewandt ist. Im Gegensatz zum Kragenbereich 12, ändert sich die in axialer Richtung bemessene Dicke des Kernbereichs 11 mit zunehmenden radialen Abstand von der Rotationsachse A. Vorzugsweise ist die Dicke des Kernbereichs 11 in dem Bereich maximal, in dem die Radnabe 1 im montierten Zustand an dem Achselement anliegt. Weiterhin ist es vorgesehen, dass der Kernbereich 11 sich im Wesentlichen radial erstreckende Rippenelemente 5 aufweist, wobei sich zwischen zwei benachbarten Rippenelementen 5 ein lichter Bereich 15 ausbildet. Insbesondere ist es vorgesehen, dass die Rippenelemente 5 derart ausgestaltet sind, dass sie in axialer Richtung gesehen bereichsweise parallel zur Radachse A verlaufen und zum Kragenbereich 12 hin radial nach außen gebogen sind. Dadurch weitet die Radnabe 1 in axialer Richtung gesehen auf. In dem Bereich, in dem die Rippenelemente 5 im Wesentlichen parallel zur Radachse A verlaufen, legen die Rippenelemente 5 mit Ihrer Außenseite eine Mantelaußenfläche 14 fest. Vorzugsweise ist es vorgesehen, dass ein Verhältnis zwischen einem Abstand A3 zwischen der Radachse A und der Mantelaußenfläche 14 und dem Durchmesser D der Radnabe 1 einen Wert zwischen 0,3 und 0,8, bevorzugt zwischen 0,45 und 0,75 besonders bevorzugt zwischen 0,48 und 0,58 annimmt. Weiterhin ist es vorgesehen, dass ein Verhältnis zwischen einer Länge des Bereichs, in dem die Mantelaußenfläche 14 im Wesentlichen parallel zur Radachse A verläuft, und einer Gesamtlänge der Radnabe A in axialer Richtung einen Wert zwischen 0,2 und 0,5, bevorzugt zwischen 0,25 und 0,45 und besonders bevorzugt zwischen 0,32 und 0,42 an. Weiterhin ist es denkbar, dass der lichte Bereich 15 in radialer Richtung gesehen im Wesentlichen in einer Linie zur Materialverdünnung 18 angeordnet ist. Weiterhin ist es bevorzugt vorgesehen, dass das Rippenelement 5 mit einem ersten Ende unmittelbar an den Kragenbereich 12 anschließt und mit einem zweiten Ende in den Bereich übergeht, in der das Rippenelement 5 die parallel zur Radachse A verlaufende Mantelaußenfläche 14 ausbildet. Insbesondere ist es vorgesehen, dass die Primäraussparung 21, über die die Bremsscheibe 2 an die Radnabe 1 angebunden wird, im Kernbereich 11, vorzugsweise in einem Bereich, der zwischen der Radachse A und der Mantelaußenfläche 14 liegt, angeordnet ist.

Hierbei verläuft die Primäraussparung 21 im Wesentlichen axial. Weiterhin ist es in der in Figur 1 dargestellten Ausführungsform vorgesehen, dass sich die Primäraussparung 21 über das ganze Rippenelement 5 erstreckt. Durch die Anordnung der Primäraussparung 21 im dickeren Kernbereich 11 lassen sich in vorteilhafter Weise größere Klemmlängen erzeugen, als wenn die Primäraussparung 21 zur Anbindung der Bremsscheibe 2 im Kragenbereich 12 angeordnet ist. Mit dieser vergrößerten Klemmlänge geht mit Vorteil eine erhöhte Verspannkraft einher, die schließlich höhere Bremsmomente zulässt. Zudem lassen sich thermische Effekte durch diese konstruktive Anordnung der Primäraussparungen 21 vergleichsweise gut kompensieren. Weiterhin ist es in der in Figur 1 dargestellten Ausführungsform vorgesehen, dass der Kernbereich 11 eine Bremsscheibenauflagefläche 25 aufweist, in der die Primäraussparung 21 mündet. Auf der Bremsscheibenauflagefläche 25 liegt im montierten Zustand die Bremsscheibe 2 an. In der vorliegenden Ausführungsform ist es vorgesehen, dass jeweils zwei Primäraussparungen 21 einem Rippenelement 5 zugeordnet sind bzw. durch das jeweilige Rippenelement 5 hindurchlaufen. Zweckmäßig ist es vorgesehen, dass das Verhältnis zwischen einem radialen Abstand A1 zwischen der Rotationsachse A und der Primäraussparung 21 und einem in radialer Richtung bemessenen Durchmesser D der Radnabe 1 einen Wert zwischen 0,6 und 0,3, bevorzugt, zwischen 0,55 und 0,35 und besonders bevorzugt zwischen 0,4 und 0,5 annimmt. Weiterhin ist es vorgesehen, dass die Rippenelemente 5 auf der in radialer Richtung außenliegenden Seite strukturiert sind. Dadurch lassen sich gezielt weitere Materialeinsparungen realisieren, die sich positiv auf das Gesamtgewicht der Radnabe 1 auswirken.

In der Figur 1c ist die Radnabe 1 in einer Schnittansicht dargestellt. Vorzugsweise ist es vorgesehen, dass ein Verhältnis zwischen dem radialen Abstand A1 zwischen der Rotationsachse A und der Primäraussparung 21 und einer sich in axialer Richtung erstreckenden Länge der Primäraussparung 21 einen Wert zwischen 0,65 und 0,85, bevorzugt zwischen 0,7 und 0,78, und besonders bevorzugt zwischen 0,72 und 0,77 annimmt. Dabei erstreckt sich die Primäraussparung 21 von einer ersten Öffnung an der Bremsscheibenanlagefläche 25 bis zu einer zweiten Öffnung auf der in axialer Richtung gesehen gegenüberliegenden Seite. Dabei liegt die zweite Öffnung auf Höhe des Kragenbereichs 12 ohne bündig mit einer Seite des Kragenbereichs 12 abzuschließen.

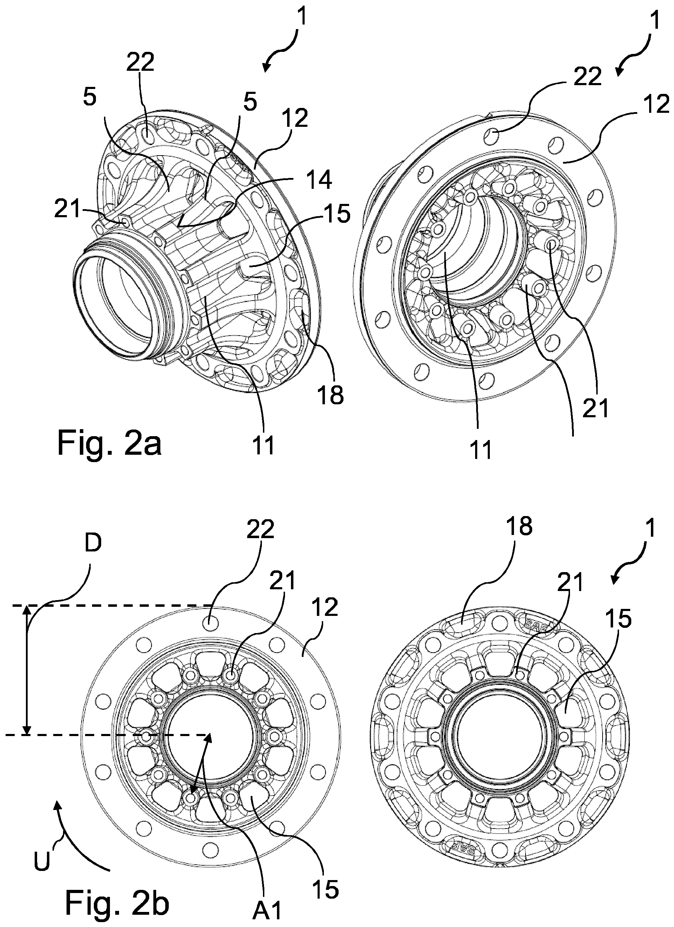

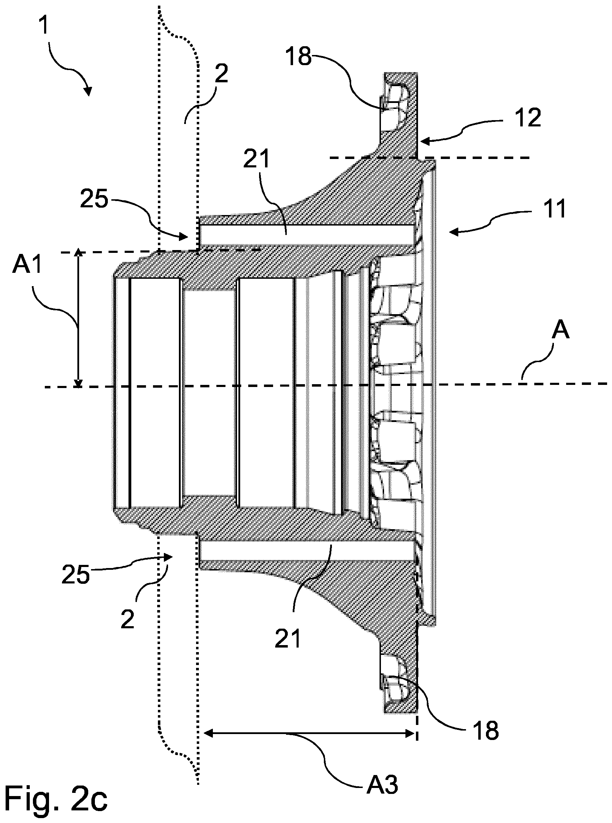

In den Figuren 2a bis 2c ist eine Radnabe 1 gemäß einer zweiten beispielhaften Ausführungsform der vorliegenden Erfindung dargestellt. Dabei sind in der Figur 2a zwei perspektivische Ansichten, in der Figur 2b jeweils eine Draufsicht auf eine Rückseite (links) und eine Vorderseite (rechts) der Radnabe 1 und in Figur 2c eine Schnittansicht illustriert. Die in den Figuren 2a bis 2c dargestellte Ausführungsform unterscheidet sich im Wesentlich zu der Ausführungsform aus den Figuren 2a bis 2c dahingehend, dass jedem Rippenelement 5 jeweils eine Primäraussparung 21 zugeordnet ist. Weiterhin ist es vorgesehen, dass sich die Primäraussparung 21 zumindest teilweise in einem hülsenförmigen Teilbereich 26 erstreckt, der vom Rippenelement 5 absteht. Dabei steht der hülsenförmige Teilbereich 26 in axialer Richtung in Richtung des Kragenbereichs 12 vom Rippenelement 5 ab. Weiterhin ist es vorgesehen, dass die lichten Bereiche 15 zwischen zwei benachbarten Rippenelementen 5 in radialer Richtung gesehen jeweils deckungsglich bzw. entlang einer Linie zu den Sekundäraussparungen 22 angeordnet sind. Weiterhin ist es vorgesehen, dass jeder ersten Öffnung der Primäraussparungen 21 jeweils eine Bremsscheibenanlagefläche 25 zuzuordnen ist. Wie der Figur 2c zu entnehmen ist, schließt die zweite Öffnung in axialer Richtung gesehen bündig mit einer Außenseite des Kragenbereichs 12 ab.

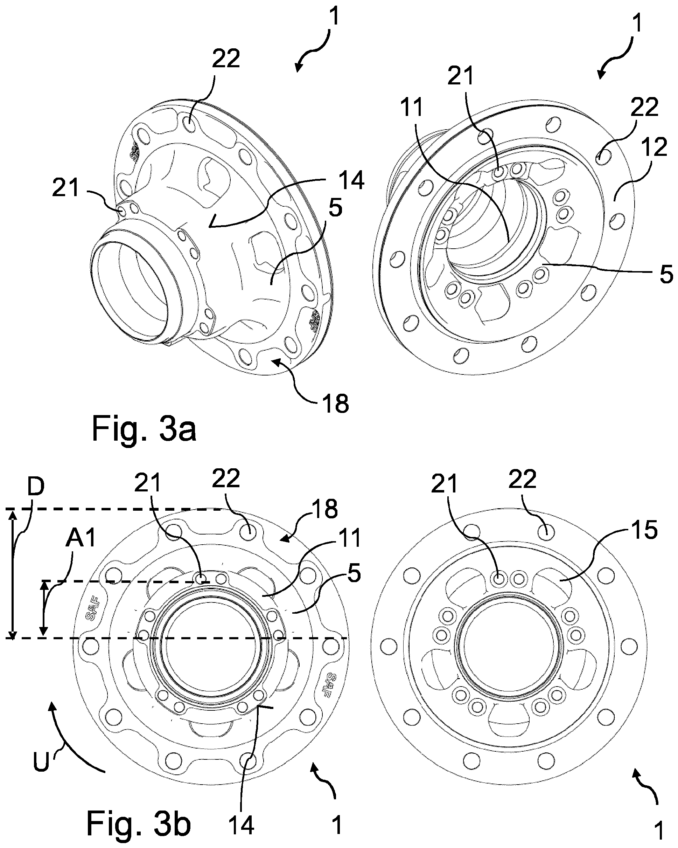

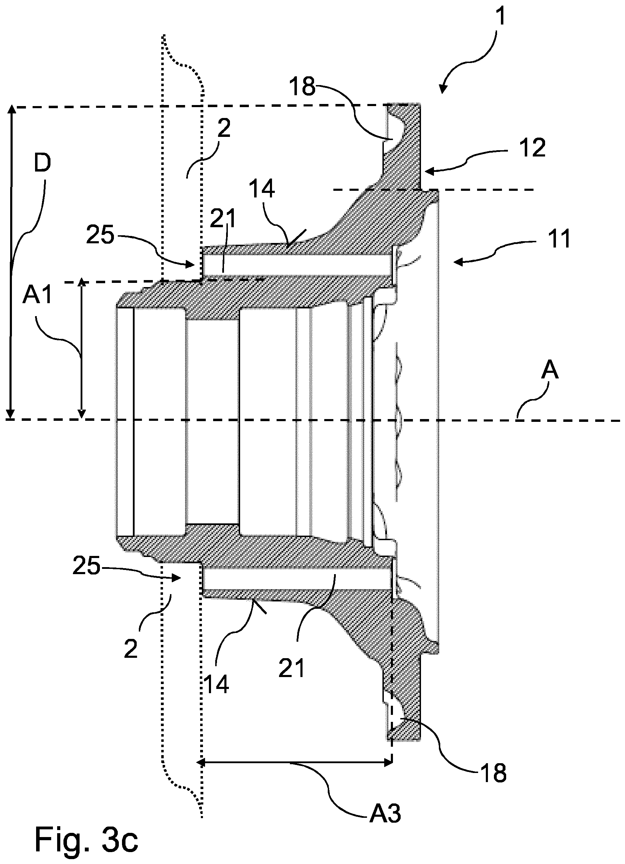

In den Figuren 3a bis 3c ist eine Radnabe 1 gemäß einer zweiten beispielhaften Ausführungsform der vorliegenden Erfindung dargestellt. Dabei sind in der Figur 3a zwei perspektivische Ansichten, in der Figur 3b jeweils einer Draufsicht auf eine Rückseite (links) und eine Vorderseite (rechts) der Radnabe 1 und in Figur 3c eine Schnittansicht illustriert. Im Wesentlichen entspricht die Ausführungsform derjenigen aus den Figuren 1a bis 1c, ohne dass die Rippenelemente 5 strukturiert sind.

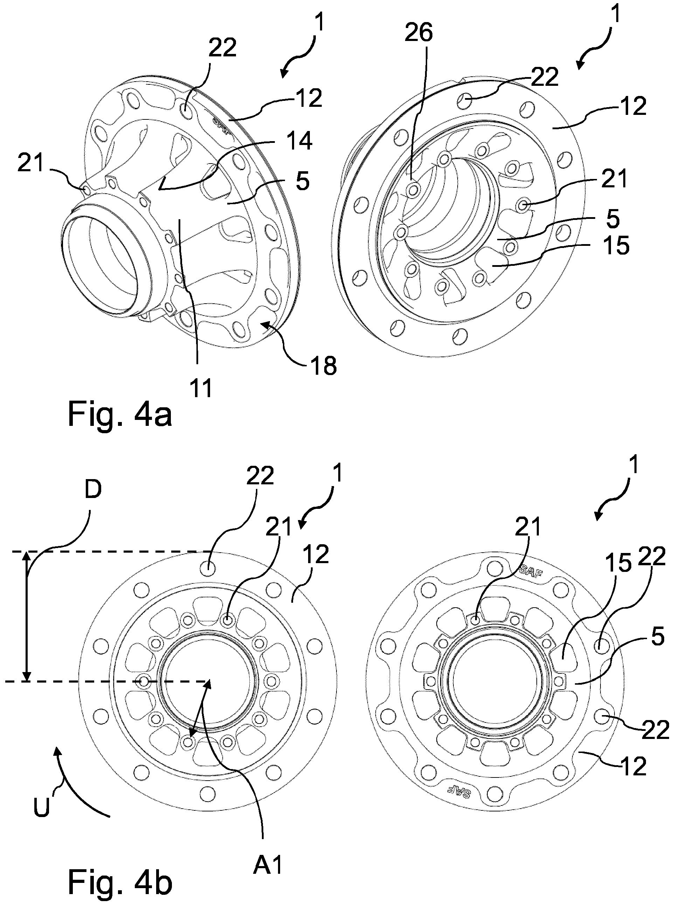

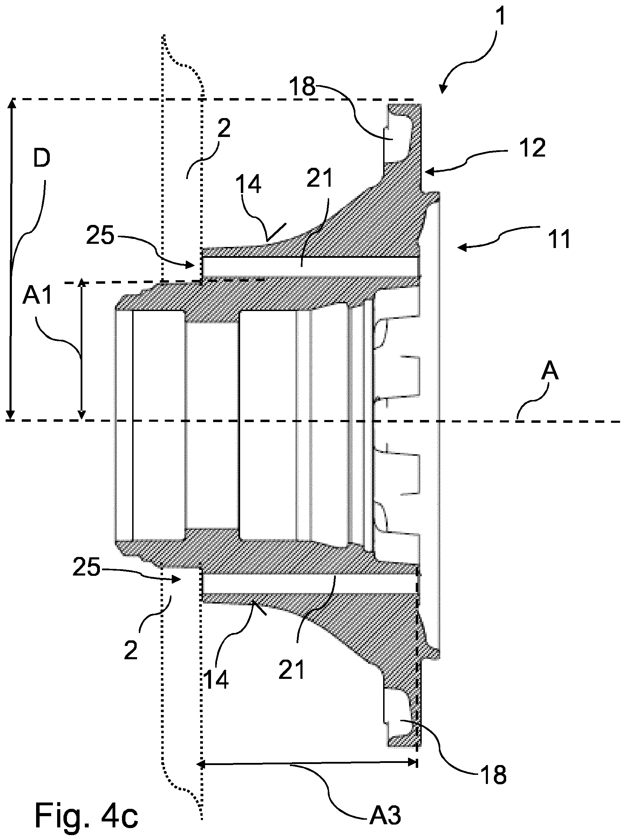

In den Figuren 4a bis 4c ist eine Radnabe 1 gemäß einer zweiten beispielhaften Ausführungsform der vorliegenden Erfindung dargestellt. Dabei sind in der Figur 4a zwei perspektivische Ansichten, in der Figur 4b jeweils eine Draufsicht auf eine Rückseite (links) und eine Vorderseite (rechts) der Radnabe 1 und in Figur 4c eine Schnittansicht illustriert. Im Wesentlichen entspricht die Ausführungsform derjenigen aus den Figuren 2a bis 2c, ohne dass die Rippenelemente 5 strukturiert sind.

### Bezugszeichen:

- 1: Radnabe
- 2: Bremsscheibe
- 5: Rippenelement
- 11: Kernbereich
- 12: Kragenbereich
- 15: lichter Bereich
- 18: Materialverdünnung
- 21: Primäraussparung
- 22: Sekundäraussparung
- 25: Bremsscheibenanlagefläche
- 26: hülsenförmiger Teilbereich
- A: Rotationsaches
- A1: Abstand zwischen der Rotationsachse und der Primäraussparung
- A2: Abstand zwischen der Rotationsachse und Mantelaußenseite
- A3: Erstreckungslänge der Primäraussparung
- U: Umlaufrichtung
- D: Durchmesser

## Patentansprüche

1. Radnabe (1) umfassend
- einen in radialer Richtung gesehen außenliegenden Kragenbereich (12) und
- einen in radialer Richtung gesehen innenliegenden Kernbereich (11), wobei der innenliegende Kernbereich (11) in axialer Richtung eine größere Erstreckung aufweist als der außenliegenden Kragenbereich (12), und wobei die Radnabe (1) im innenliegenden Kernbereich (11) eine im Wesentlichen axial verlaufende Primäraussparung (21) zur Anbindung einer Bremsscheibe (2) aufweist,
**dadurch gekennzeichnet, dass** ein Verhältnis zwischen einem radialen Abstand (A1) zwischen einer Rotationsachse (A) und der Primäraussparung (21) und einem in radialer Richtung bemessenen Durchmesser (D) der Radnabe (1) einen Wert zwischen 0,6 und 0,3 annimmt.

2. Radnabe (1) gemäß Anspruch 1, wobei der Kernbereich (11) im Wesentlichen radial verlaufende Rippenelemente (5) umfasst.

3. Radnabe gemäß Anspruch 2, wobei die Rippenelemente (5) den Kernbereich (11) mit dem Kragenbereich (12) verbinden.

4. Radnabe gemäß Anspruch 2 oder 3, wobei jedes Rippenelement (5) genau eine Primäraussparung (21) aufweist.

5. Radnabe (1) gemäß einem der vorhergehenden Ansprüche, wobei der außenliegende Kragenbereich (12) eine Sekundäraussparung (22) aufweist, wobei sich die Primäraussparung (11) in axialer Richtung weiter erstreckt als die Sekundäraussparung (12).

6. Radnabe gemäß einem der vorhergehenden Ansprüche, wobei zumindest eine, bevorzugt alle, Primäraussparung/en (21) den Kernbereich (11) und/oder die Radnabe (1) vollständig durchdringt/en.

7. Radnabe gemäß einem der vorhergehenden Ansprüche, wobei die Primäraussparungen (21) in eine Umlaufrichtung (U) versetzt zu Sekundäraussparungen (22) angeordnet sind.

8. Radnabe (1) gemäß einem der vorhergehenden Ansprüche, wobei ein Verhältnis zwischen einer in axialer Richtung bemessenen Erstreckung der Primäraussparung (21) zu einer Gesamtausdehnung der Radnabe (1) in axialer Richtung einen Wert zwischen 0,5 und 0,98, bevorzugt 0,75 und 0,95 und besonders bevorzugt zwischen 0,8 und 0,93 annimmt.

9. Radnabe (1) gemäß einem der vorhergehenden Ansprüche, wobei das Verhältnis zwischen dem radialen Abstand (A1) zwischen er Rotationsachse (A) und der Primäraussparung (21) und dem in radialer Richtung bemessenen Durchmesser (D) der Radnabe (1) einen Wert zwischen 0,55 und 0,35 und bevorzugt zwischen 0,4 und 0,5 annimmt.

10. Radnabe (1) gemäß einem der vorhergehenden Ansprüche, wobei in Umlaufrichtung (U) gesehen zwischen zwei Rippenelementen (5) ein lichter Bereich (15) angeordnet ist.

11. Radnabe (1) gemäß Anspruch 10, wobei die in Umlaufrichtung (U) bemessene Fläche, die den Rippenelementen (5) zugeordnet ist, 0,3 bis 0,5-mal so groß ist wie die Fläche, die dem lichten Bereich (18) zugeordnet ist.

12. Radnabe (1) gemäß einem der vorhergehenden Ansprüche, wobei sich die Primäraussparung (11) in radialer Richtung gesehen über die gesamte Länge des Rippenelements (5) erstreckt, oder, wobei die Primäraussparung (21) zumindest teilweise durch einen hülsenförmigen Teilbereich (26), der vom Rippenelement (5), vorzugsweise in axialer Richtung, absteht, gebildet ist.

13. Radnabe (1) gemäß einem der vorhergehenden Ansprüche, wobei die Primäraussparung (21) zu einer Seite hin in einer Bremsscheibenanlagefläche (25) mündet, wobei vorzugsweise die Bremsscheibenanlagefläche (25) in Umlaufrichtung (U) gesehen unterbrochen oder durchgehend ausgestaltet ist.

14. System aus einer Bremsscheibe (2) und einer Radnabe (1) gemäß einem der vorhergehenden Ansprüche, wobei die Bremsscheibe (2) mittels eines durch die Primäraussparung (21) geführten Befestigungsmittels an der Radnabe (21), insbesondere an der Bremsscheibenanlagefläche (25), anbindbar ist.

15. Verfahren zur Montage einer Bremsscheibe (2) an einer Radnabe (11) gemäß einem der vorhergehenden Ansprüche umfassend
- Bereitstellen einer Radnabe (1) gemäß einem der vorhergehenden Ansprüche
- Einführen eines Befestigungsmittels in die Primäraussparung (21) und
- Anbinden der Bremsscheibe (2) mittels des Befestigungsmittels an die Radnabe (11).

## Claims

1. A wheel hub (1), comprising
- an outer collar region (12), as seen in the radial direction, and
- an inner core region (11), as seen in the radial direction,
wherein the inner core region (11) has a greater extent in the axial direction than the outer collar region (12), and
wherein, in the inner core region (11), the wheel hub (1) has a substantially axially running primary recess (21) for the connection of a brake disk (2), **characterized in that** a ratio between a radial distance (A1) between an axis of rotation (A) and the primary recess (21) and a diameter (D) of the wheel hub (1), as measured in the radial direction, assumes a value of between 0.6 and 0.3.

2. The wheel hub (1) as claimed in claim 1, wherein the core region (11) comprises substantially radially running rib elements (5).

3. The wheel hub as claimed in claim 2, wherein the rib elements (5) connect the core region (11) to the collar region (12).

4. The wheel hub as claimed in claim 2 or 3, wherein each rib element (5) has precisely one primary recess (21).

5. The wheel hub (1) as claimed in one of the preceding claims, wherein the outer collar region (12) has a secondary recess (22), wherein the primary recess (11) extends further in the axial direction than the secondary recess (12).

6. The wheel hub as claimed in one of the preceding claims, wherein at least one primary recess (21), preferably all of the primary recesses (21), completely penetrates/penetrate the core region (11) and/or the wheel hub (1).

7. The wheel hub as claimed in one of the preceding claims, wherein the primary recesses (21) are arranged offset in a revolving direction (U) with respect to secondary recesses (22).

8. The wheel hub (1) as claimed in one of the preceding claims, wherein a ratio between an extent of the primary recess (21), as measured in the axial direction, to an overall extent of the wheel hub (1) in the axial direction assumes a value of between 0.5 and 0.98, preferably 0.75 and 0.95 and particularly preferably of between 0.8 and 0.93.

9. The wheel hub (1) as claimed in one of the preceding claims, wherein the ratio between the radial distance (A1) between the axis of rotation (A) and the primary recess (21) and the diameter (D) of the wheel hub (1), as measured in the radial direction, assumes a value of between 0.55 and 0.35 and preferably of between 0.4 and 0.5.

10. The wheel hub (1) as claimed in one of the preceding claims, wherein a clear region (15) is arranged between two rib elements (5), as seen in the revolving direction (U).

11. The wheel hub (1) as claimed in claim 10, wherein the area which is measured in the revolving direction (U) and is assigned to the rib elements (5) is 0.3 to 0.5 times as large as the area which is assigned to the clear region (18).

12. The wheel hub (1) as claimed in one of the preceding claims, wherein the primary recess (11), as seen in the radial direction, extends over the entire length of the rib element (5), or wherein the primary recess (21) is at least partially formed by a sleeve-shaped partial region (26) which protrudes from the rib element (5), preferably in the axial direction.

13. The wheel hub (1) as claimed in one of the preceding claims, wherein the primary recess (21) opens toward one side in a brake disk contact surface (25), wherein the brake disk contact surface (25) is preferably interrupted or continuous, as seen in the revolving direction (U).

14. A system consisting of a brake disk (2) and a wheel hub (1), in particular as claimed in one of the preceding claims, wherein the brake disk (2) is connectable to the wheel hub (21), in particular to the brake disk contact surface (25), by means of a fastening means guided through the primary recess (21).

15. A method for mounting a brake disk (2) on a wheel hub (11), as claimed in one of the preceding claims, comprising
- providing a wheel hub (1) as claimed in one of the preceding claims,
- introducing a fastening means into the primary recess (21) and
- connecting the brake disk (2) to the wheel hub (11) by means of the fastening means.

## Revendications

1. Moyeu de roue (1) comprenant
- une zone de collerette (12) située à l'extérieur, vue en direction radiale, et
- une zone de noyau (11) située à l'intérieur, vue en direction radiale, la zone de noyau intérieure (11) ayant une plus grande extension dans la direction axiale que la zone de collerette extérieure (12), et le moyeu de roue (1) présentant une échancrure primaire (21) s'étendant sensiblement axialement dans la zone de noyau intérieure (11) pour le raccordement d'un disque de frein (2),
**caractérisé en ce que**
un rapport d'une distance radiale (A1) entre un axe de rotation (A) et l'échancrure primaire (21) sur un diamètre (D) du moyeu de roue (1) mesuré dans la direction radiale prend une valeur comprise entre 0,6 et 0,3.

2. Moyeu de roue (1) selon la revendication 1,
dans lequel la zone de noyau (11) comprend des éléments de nervure (5) s'étendant sensiblement radialement.

3. Moyeu de roue selon la revendication 2,
dans lequel les éléments de nervure (5) relient la zone de noyau (11) à la zone de collerette (12).

4. Moyeu de roue selon la revendication 2 ou 3,
dans lequel chaque élément de nervure (5) présente précisément une échancrure primaire (21).

5. Moyeu de roue (1) selon l'une des revendications précédentes,
dans lequel la zone de collerette extérieure (12) présente une échancrure secondaire (22), l'échancrure primaire (11) s'étendant plus loin dans la direction axiale que l'échancrure secondaire (12).

6. Moyeu de roue selon l'une des revendications précédentes,
dans lequel au moins une, de préférence toutes les échancrures primaires (21) traversent complètement la zone de noyau (11) et/ou le moyeu de roue (1).

7. Moyeu de roue selon l'une des revendications précédentes,
dans lequel les échancrures primaires (21) sont disposées en décalage par rapport aux échancrures secondaires (22) dans une direction périphérique (U).

8. Moyeu de roue (1) selon l'une des revendications précédentes,
dans lequel un rapport d'une extension de l'échancrure primaire (21) mesurée dans la direction axiale sur une extension totale du moyeu de roue (1) dans la direction axiale prend une valeur comprise entre 0,5 et 0,98, de préférence entre 0,75 et 0,95 et de manière particulièrement préférée entre 0,8 et 0,93.

9. Moyeu de roue (1) selon l'une des revendications précédentes,
dans lequel le rapport de la distance radiale (A1) entre l'axe de rotation (A) et l'échancrure primaire (21) sur le diamètre (D) du moyeu de roue (1) mesuré dans la direction radiale prend une valeur comprise entre 0,55 et 0,35 et de préférence entre 0,4 et 0,5.

10. Moyeu de roue (1) selon l'une des revendications précédentes,
dans lequel une zone libre (15) est disposée entre deux éléments de nervure (5), vue dans la direction périphérique (U).

11. Moyeu de roue (1) selon la revendication 10,
dans lequel la surface, mesurée dans la direction périphérique (U) et associée aux éléments de nervure (5), est de 0,3 à 0,5 fois plus grande que la surface associée à la zone libre (18).

12. Moyeu de roue (1) selon l'une des revendications précédentes,
dans lequel l'échancrure primaire (21), vue dans la direction radiale, s'étend sur toute la longueur de l'élément de nervure (5), ou l'échancrure primaire (21) est formée au moins partiellement par une zone partielle en forme de manchon (26) qui fait saillie de l'élément de nervure (5), de préférence dans la direction axiale.

13. Moyeu de roue (1) selon l'une des revendications précédentes,
dans lequel l'échancrure primaire (21) débouche d'un côté dans une surface d'appui de disque de frein (25), la surface d'appui de disque de frein (25) étant conçue de préférence de façon interrompue ou continue, vue dans la direction périphérique (U).

14. Système constitué d'un disque de frein (2) et d'un moyeu de roue (1) selon l'une des revendications précédentes,
dans lequel le disque de frein (2) peut être raccordé au moyeu de roue (1), en particulier à la surface d'appui de disque de frein (25), à l'aide d'un moyen de fixation mené à travers l'échancrure primaire (21).

15. Procédé de montage d'un disque de frein (2) sur un moyeu de roue (1) selon l'une des revendications précédentes, consistant à :
- fournir un moyeu de roue (1) selon l'une des revendications précédentes,
- insérer un moyen de fixation dans l'échancrure primaire (21), et
- raccorder le disque de frein (2) au moyeu de roue (1) à l'aide du moyen de fixation.
